# EUROPEAN PATENT SPECIFICATION

(11) **EP 2 829 704 B1**
(45) Date of publication and mention of the grant of the patent: **05.07.2017**
(21) Application number: 13764607.1
(22) Date of filing: 15.03.2013
(51) Int. Cl.: F02B 43/00, F02M 21/02, B01D 46/00, G01F 23/24, F02D 19/02, F02D 19/06

(54) **OIL SEPARATOR AND GAS FUEL SUPPLY DEVICE**
ÖLABSCHEIDER UND VORRICHTUNG ZUR ZUFÜHRUNG VON GASFÖRMIGEM BRENNSTOFF
SÉPARATEUR D'HUILE ET DISPOSITIF D'ALIMENTATION DE COMBUSTIBLE GAZEUX

(30) Priority: 22.03.2012 JP 2012065880; 23.07.2012 JP 2012163001
(43) Date of publication of application: 28.01.2015
(73) Proprietor: Aisan Kogyo Kabushiki Kaisha, Obu-shi, Aichi 474-8588 (JP); Toyota Jidosha Kabushiki Kaisha, Toyota-shi, Aichi-ken 471-8571 (JP)
(72) Inventor: FUKUDA, Hideyuki, Obu-shi, Aichi 474-8588 (JP); TAKASAKI, Jun, Obu-shi, Aichi 474-8588 (JP); ODA, Hiroshi, Obu-shi, Aichi 474-8588 (JP); SUZUKI, Masao, Toyota-shi, Aichi-ken, 471-8571 (JP); KOMODA, Takao, Toyota-shi, Aichi-ken, 471-8571 (JP)
(74) Representative: Neuefeind, Regina
(86) International application number: PCT/JP2013/057549
(87) International publication number: WO 2013/141179

(56) References cited:
- EP-A1- 1 884 651
- WO-A2-2006/078787
- JP-A- H0 611 378
- JP-A- 2000 205 050
- JP-A- 2004 197 604
- JP-A- 2004 251 204
- JP-A- 2010 025 755
- JP-A- 2010 025 755
- JP-U- H0 264 740
- JP-U- H0 377 057
- US-A1- 2011 272 045

## Description

### TECHNICAL FIELD

The present invention relates to an oil separator, which separates oil contained in a gaseous fuel such as compressed natural gas (CNG) supplied to an injector of an internal combustion engine from the gaseous fuel, and a gaseous fuel supply device including the oil separator.

### BACKGROUND ART

Generally, gaseous fuel such as the CNG contains impurities such as oil mist mixed in the process of compressing the gaseous fuel to a high pressure. Accordingly, a gaseous fuel supply device, which supplies a gaseous fuel from a storage tank of the gaseous fuel to an injector of an internal combustion engine, includes an oil separator, which separates impurities such as oil from the gaseous fuel and delivers the gaseous fuel from which the impurities are separated to the injector.

Patent Document 1 discloses an example of the oil separator. The oil separator includes a separating portion, which separates oil from the gaseous fuel that has flowed from the storage tank, and a drain tank, which stores the oil separated from the gaseous fuel by the separating portion. The drain tank is located at a position that is lower than the position of the separating portion in the vertical direction. The distal end of a drain pipe, which extends downward from the separating portion, is located in the drain tank.

Further, the oil separator includes a detection mechanism for detecting the position of the liquid surface of the oil in the drain tank. The detection mechanism includes a float, which has a through-hole through which the drain pipe passes, and a detection sensor located on the float. When the oil separated from the CNG by the separating portion is discharged in the drain tank through the drain pipe, the float moves upward in the vertical direction with the drain pipe as a guide according to an increase of the amount of storage of the oil in the drain tank. Signals according to the movement of the float in the vertical direction are then supplied from the detection sensor. If the amount of storage of the oil in the drain tank is determined to be greater than the prescribed amount based on the signals from the detection sensor, a discharge valve is opened so that the oil in the drain tank is discharged outside through the discharge valve.

### PRIOR ART DOCUMENT

### Patent Document

Patent Document 1: Japanese Laid-Open Patent Publication No. 2000-230459
JP 2000 205050 A describes a gas-fueled vehicle that carries an impurity separation mechanism capable of filtering out such impurities as oil in gaseous fuel positively without causing pressure loss among others. The gas-fueled vehicle is mounted with a gaseous fuel tank, a decompression mechanism disposed downstream of the gaseous fuel tank to decompress gaseous fuel, an impurity separation mechanism disposed downstream of the decompression mechanism to filter out impurities in gaseous fuel, and a fuel injection mechanism disposed downstream of the impurity separation mechanism.
JP 2004 251204 A describes an LPG tank connected to a venturi of an LPG internal combustion engine through a regulator. An impurities discharge passage is connected to a decompression chamber of the regulator, and an impurities discharge valve is disposed inside the impurities discharge passage. An outlet of the impurities discharge valve is connected to an impurities collection container. It is determined whether or not the amount of the impurities stored in the compression chamber is in excess of its allowable upper limit level.JP 2010 025755 A describes an oil level detection apparatus including a first thermistor provided for a position corresponding to a level L1 in an oil pan to be fed with electricity to generate heat by itself and a second thermistor of the same type as the first thermistor provided for a position corresponding to a level L2 lower than the level L1 in the oil pan. The apparatus feeds electricity to the first thermistor and the second thermistor, detects the difference of electric resistance between the thermistors and detects that an oil level is equal to the level L1 or lower on the basis of a detected difference of electric resistance.
US 2011/272045 A1 describes fuel interface modules that can be used in automotive vehicle fuel systems and that can include a body that defines a fuel channel and a plurality of ports through which fluid communication with the fuel channel can be established.

### SUMMARY OF THE INVENTION

### Problems that the Invention is to Solve

In the detection mechanism disclosed in Patent Document 1, loads caused by the movement of the float in the vertical direction in accordance with increase and decrease of the amount of storage of the oil in the drain tank are applied to the wiring of the detection sensor provided on the float. Accordingly, the arrangement of the wiring needs to be considered to avoid breakage of the wiring of the detection sensor due to the loads. In the above detection mechanism, a member for guiding a moving body such as the float and the movement of the moving body is needed. This complicates the configuration for detecting the amount of storage of the oil.

An objective of the present invention is to provide an oil separator and a gaseous fuel supply device that are capable of detecting an amount of storage of oil in a drain tank with a simple structure.

### Means for Solving the Problems

In order to achieve the above described objective, an oil separator including: a separating portion, a drain tank, and a detection mechanism is provided. The separating portion separates oil contained in a gaseous fuel from the gaseous fuel. The drain tank stores the separated oil. The detection mechanism detects an amount of storage of the oil in the drain tank. The separating portion is located in an upper area in the drain tank in a vertical direction. The detection mechanism is fixed to a side wall of the drain tank such that the detection mechanism is located at a position that is lower than the position of the separating portion in the drain tank in the vertical direction.

According to the above configuration, the detection mechanism detects the position of the liquid surface in the drain tank before the oil stored in the drain tank contacts the separating portion located in the upper area of the drain tank in the vertical direction. The detection mechanism is fixed to the side wall of the drain tank. Thus, the position of the detection mechanism corresponding to the sensor is not moved and the wiring such as a signal line connected to the detection mechanism is less likely to be broken in comparison to the case where the sensor is provided on the float. This simplifies measures against the breaking of the wiring. A moving body such as a float that moves in accordance with the increase and decrease of the amount of storage of the oil is not required in the drain tank. Accordingly, the amount of storage of the oil in the drain tank is detected with a simple structure.

The uppermost position of the liquid surface in the drain tank may change depending on the gradient of the road surface on which the vehicle is positioned and the acceleration/deceleration generated in the vehicle. Accordingly, it is preferable that the detection mechanism be located at a position that satisfies at least one of the following two conditions. In a more preferred aspect, the detection mechanism may be located at a position that satisfies both the following two conditions.
(A) The detection mechanism is immersed in the oil in the drain tank before the oil contacts the separating portion in a case where a gradient of a road surface on which a vehicle runs is an expected maximum value.
(B) The detection mechanism is immersed in the oil in the drain tank before the oil contacts the separating portion in a case where acceleration/deceleration occurred during running of the vehicle is an expected maximum value.

In the case where the position satisfies the above condition (A), if the position of the liquid surface in the drain tank is not detected by the detection mechanism, the oil in the drain tank is restricted from contacting the separating portion when the vehicle runs on a slope. In the case where the position satisfies the above condition (B), if the position of the liquid surface in the drain tank is not detected by the detection mechanism, the oil in the drain tank is restricted from contacting the separating portion when the vehicle is rapidly accelerated, decelerated, and steeply turns.

The detection mechanism includes a first thermistor and a second thermistor that generate heat according to a supply of current. In this case, it is done that in a state where the gaseous fuel that has passed through the separating portion is not supplied, a voltage applied to the first thermistor be lower than a voltage applied to the second thermistor when the first and second thermistors are not immersed in the oil, and the voltage applied to the first thermistor be higher than the voltage applied to the second thermistor when the first and second thermistors are immersed in the oil. Accordingly, when the gaseous fuel that has passed through the separating portion is not supplied to the injector, the voltages applied to the thermistors are compared with each other so that the position of the liquid surface in the drain thank is detected. Further, it is preferable that when the first and second thermistors are in gas, an amount of heat dissipation of the first thermistor be greater than an amount of heat dissipation of the second thermistor, and when the first and second thermistors are in liquid, the amount of heat dissipation of the first thermistor be less than the amount of heat dissipation of the second thermistor.

Moreover, the detection mechanism may include a detection thermistor that generates heat when supplied with current. It is preferable that the detection thermistor be configured to have a heat dissipation coefficient that has a value in accordance with a flow rate of the gaseous fuel that flows in the drain tank.

In this case, if the detection thermistor is immersed in the oil, the change state of the voltage applied to the detection thermistor in the state where the gaseous fuel that has passed through the separating portion is not supplied to the injector is almost the same as the change state of the voltage applied to the detection thermistor in the state where the gaseous fuel is supplied to the injector. In contrast, if the detection thermistor is not immersed in the oil, the change state of the voltage applied to the detection thermistor in the state where the gaseous fuel that has passed through the separating portion is not supplied to the injector greatly differs from the change state of the voltage applied to the detection thermistor in the state where the gaseous fuel is supplied to the injector. Accordingly, the voltages before and after the start of supply of the gaseous fuel that has passed through the separating portion to the injector are compared with each other so that the position of the liquid surface in the drain tank is detected.

In the method of detecting the position of the liquid surface in the drain tank based on the voltage applied to the thermistor, if the heat dissipation amount of the thermistor is small, the detection accuracy of the position may be reduced. Accordingly, it is preferable that the thermistor be supported by the drain tank with a heat insulation material located between the thermistor and the circumferential wall of the communicating hole formed in the side wall of the drain tank. Accordingly, the heat insulation material limits the transfer of the heat generated by the thermistor toward the side wall of the drain tank. This improves the detection accuracy of the position of the liquid surface in the drain tank.

Although the monitoring process in which the amount of storage of the oil in the drain tank is monitored based on the detection result by the detection mechanism may be performed during the running of the vehicle, it is preferable that the monitoring process be performed when the vehicle is stopped. The control configuration as above described is employed so that the monitoring process is performed in the state where the change of the liquid surface in the drain tank is scarcely observed. This improves the detection accuracy of the position of the liquid surface in the drain tank by the monitoring process.

In the case where the detection mechanism including the first thermistor and the second thermistor is employed, it is preferable that the monitoring process in which the amount of storage of the oil in the drain tank is monitored based on the difference of the voltages applied to the thermistors to which current is supplied be performed when the gaseous fuel that has passed through the separating portion is not supplied to the injector. Accordingly, in the case where the engine operation using the gaseous fuel is not being performed, the monitoring process is performed so that the position of the liquid surface in the drain tank is detected.

In the case where the detection mechanism including the detection thermistor is employed, it is preferable that the monitoring process in which the amount of storage of the oil in the drain tank is monitored based on the change state of the voltage applied to the detection thermistor to which current is supplied be performed at the start of supply of the gaseous fuel that has passed through the separating portion to the injector. This enables the detection of the position of the liquid surface in the drain tank based on the amount of change of the voltage after the start of supply of the gaseous fuel.

Further, in the case where the detection mechanism including the thermistor is employed, it is preferable that the monitoring process be performed after the prescribed time has elapsed from the start of supply of current to the thermistor. In this case, the monitoring process is performed after the thermistor fully generates heat. This improves the detection accuracy of the position of the liquid surface in the drain tank in comparison to the case where the monitoring process is performed immediately after the start of supply of current to the thermistor.

If the monitoring process is ended, it is preferable that the supply of current to the thermistor be inhibited. This prolongs the life of the thermistor in comparison to the case where the supply of current to the thermistor is continued even after the monitoring process is ended.

If it is determined that the amount of storage of the oil in the drain tank exceeds the prescribed amount through the monitoring process, it is preferable to notify the occupants in the vehicle of the determination.

### BRIEF DESCRIPTION OF THE DRAWINGS

Fig. 1 is a block diagram illustrating a schematic configuration of an internal combustion engine including a gaseous fuel supply device according to a first embodiment;
Fig. 2 is a cross-sectional view illustrating a regulator;
Fig. 3 is a schematic diagram schematically illustrating a detection mechanism according to the first embodiment;
Fig. 4 is a block diagram illustrating a schematic configuration of an electric circuit of a detection device according to the first embodiment;
Fig. 5 is a graph illustrating a relationship between a potential difference and an ambient temperature;
Fig. 6 is a graph illustrating a relationship between an amount of storage of oil and a gradient of a road surface or an acceleration of a vehicle;
Fig. 7 is a flowchart illustrating a process routine that a controller performs according to the first embodiment;
Fig. 8 is a block diagram illustrating a schematic configuration of a bi-fuel type internal combustion engine according to a second embodiment;
Fig. 9 is a block diagram illustrating a schematic configuration of an electric circuit of a detection device according to the second embodiment;
Fig. 10 is a flowchart illustrating a process routine that a controller performs according to the second embodiment;
Fig. 11A is a timing chart in a case where a detection thermistor is immersed in oil; and
Fig. 11B is a timing chart in a case where the detection thermistor is not immersed in the oil.

### MODES FOR CARRYING OUT THE INVENTION

### First Embodiment

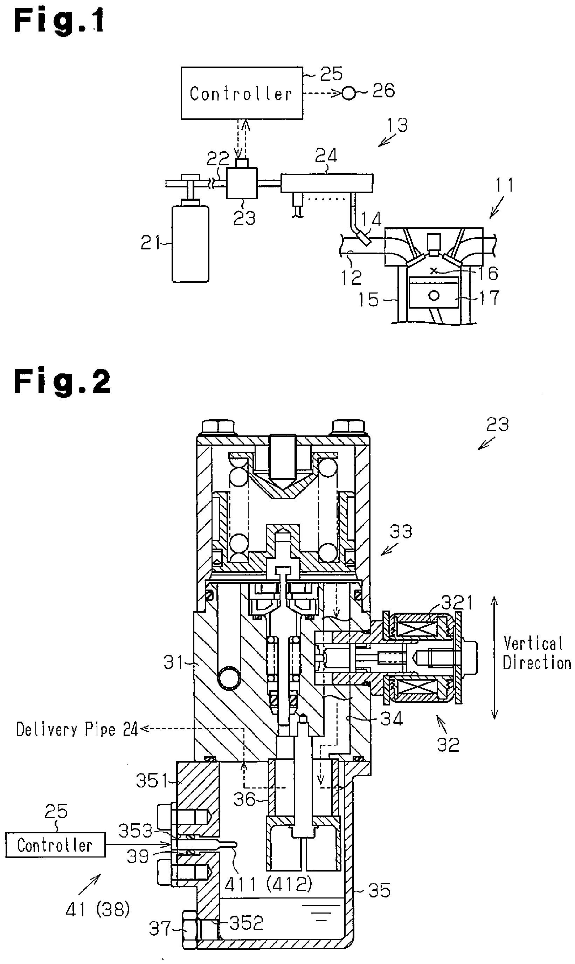

Hereinafter, a gaseous fuel supply device according to one embodiment will be described according to Figs. 1 to 7. The up-down direction in Fig. 2 corresponds to a vertical direction when a vehicle is positioned on a road surface that is parallel with a horizontal plane.

As shown in Fig. 1, an injector 14, which injects compressed natural gas CNG as a gaseous fuel supplied from a gaseous fuel supply device 13, is provided in an intake passage 12 of an internal combustion engine 11 that is capable of using the CNG. A mixture air of the CNG injected through the injector 14 and an intake air burns in a combustion chamber 16 of a cylinder 15 so that a piston 17 reciprocates and a crankshaft (not shown) rotates in the predetermined rotation direction.

The gaseous fuel supply device 13 includes a high-pressure fuel line 22 connected to a CNG tank 21, which stores the CNG. The pressure of the gaseous fuel that flows in the high-pressure fuel line 22 is regulated to a prescribed fuel pressure by a regulator 23, which includes an oil separator, and the gaseous fuel with a regulated pressure is then supplied to a delivery pipe 24. The CNG supplied through the delivery pipe 24 is injected through the injector 14 into the intake passage 12.

A controller 25 of the gaseous fuel supply device 13 includes a microcomputer configured by electronic parts such as a CPU, a ROM, and a RAM, and monitors the amount of storage of oil in the drain tank provided in the regulator 23. When the controller 25 determines that the amount of storage of oil in the drain tank has exceeded the prescribed amount, the controller 25 lights up an alert lamp 26 to notify the occupants in the vehicle of the determination.

As shown in Fig. 2, an electromagnetic shut-off valve 32 into which the CNG flows from the CNG tank 21 is connected to a body 31 of the regulator 23 according to the present embodiment. The electromagnetic shut-off valve 32 includes an electromagnetic coil 321. When current is supplied to the electromagnetic coil 321, the electromagnetic shut-off valve 32 permits supply of the CNG to the delivery pipe 24. In this case, the CNG that has passed through the electromagnetic shut-off valve 32 flows into the body 31. In contrast, when current is not supplied to the electromagnetic coil 321, the electromagnetic shut-off valve 32 inhibits the supply of the CNG to the delivery pipe 24.

The regulator 23 includes a reducing valve 33. The reducing valve 33 reduces the pressure of the CNG that has flowed through the electromagnetic shut-off valve 32 into the body 31 to a prescribed fuel pressure. The CNG with the pressure reduced by the reducing valve 33 flows through a passage 34 formed in the body 31 into a cylindrical drain tank 35 with a closed end. The drain tank 35 is attached to the lower end of the body 31.

The drain tank 35 is attached to the body 31 such that the opening of the drain tank 35 is closed. An annular element 36, which serves as a separating portion for separating the oil from the CNG that has flowed through the passage 34 into the drain tank 35, is provided in the upper area in the drain tank 35. The element 36 is configured by materials such as non-woven fabrics that permit passage of gas such as the CNG, while limiting passage of liquid such as the oil. The CNG that has passed through the element 36 is drawn into the delivery pipe 24 through a supply passage that is not shown and formed in the body 31. In contrast, the oil that has been separated from the CNG by the element 36 flows downward from the element 36, and is stored in the drain tank 35.

An opening 352, which connects the inside and the outside of the drain tank 35, is formed in the lower end of the side wall 351 of the drain tank 35. The opening 352 is closed by a manual valve 37. If the valve 37 is removed from the drain tank 35 so that the opening 352 is opened, the oil in the drain tank 35 is discharged outside through the opening 352.

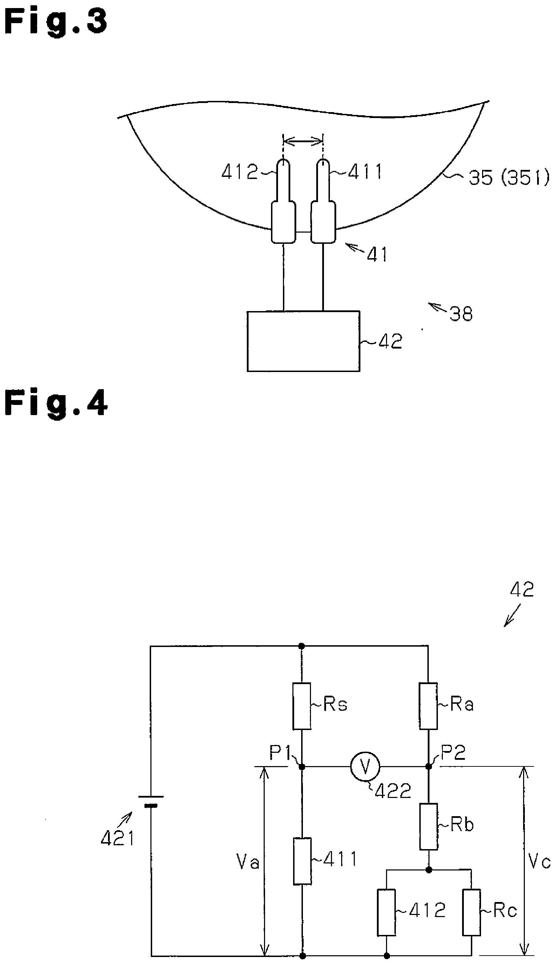

As shown in Figs. 2 and 3, the gaseous fuel supply device 13 according to the present embodiment includes a detection device 38 for detecting the amount of storage of the oil in the drain tank 35. The detection device 38 includes a detection mechanism 41 and an electric circuit 42. The detection mechanism 41 is configured by a first thermistor 411 and second thermistor 412 that are located at the same position in the vertical direction. The electric circuit 42 supplies current to each of the thermistors 411 and 412. A communicating hole 353, which connects the inside and the outside of the drain tank 35, is formed in the side wall 351 of the drain tank 35 at a position downward from the element 36. The detection mechanism 41 passes through the communicating holes 353 such that the tip ends of the thermistors 411 and 412 are located in the drain tank 35. An O-ring 39, which serves as heat insulation material having an air-tight performance and a heat insulation performance, is located between the outer circumferential surface of the detection mechanism 41 and the circumferential surface of the communicating hole 353.

The thermistors 411 and 412 are located at a certain distance (e.g., 10 mm) from each other, and configured by elements that generate heat when current is supplied to the elements. The first thermistor 411 is configured such that the heat dissipation constant of the first thermistor 411 when the first thermistor 411 generates heat in liquid (in oil) is significantly greater than the heat dissipation constant of the first thermistor 411 when the first thermistor 411 generates heat in air. An example of the first thermistor 411 is a glass-sealed thermistor with a resistance value of 2 kΩ and a B constant (B25/50) of 3500 K at 25°C. The heat dissipation constant of the thermistor in air is 2.3 W/°C, and the heat dissipation constant of the thermistor in liquid is 5.7 W/°C.

The second thermistor 412 is configured to detect the temperature used as reference for determining whether the temperature of the heat generated by the first thermistor 411 is high or low. An example of the second thermistor 412 is a chip type thermistor with a resistance value 20 kΩ and a B constant of 3930 K at the temperature 25°C.

As shown in Fig. 4, the electric circuit 42 includes a power supply 421 of DC 24 V. A current limiting resistance Rs connected in series to the first thermistor 411 is provided in the electric power supply path to the first thermistor 411. An example of the resistance value of the current limiting resistance Rs is 500 Ω. According to the voltage drop by the current limiting resistance Rs, the value of current that flows through the first thermistor 411 is limited.

In the electric circuit 42, a first resistance Ra and a second resistance Rb connected in series to the second thermistor 412, and a third resistance Rc connected in parallel with the second thermistor 412 are provided in the electric power supply path to the second thermistor 412. In the present embodiment, the resistance value of the first resistance Ra is 22 kΩ, and the resistance value of the second resistance Rb is 2 kΩ. Further, the resistance value of the third resistance Rc is 22 kΩ.

Further, the electric circuit 42 according to the present embodiment includes a voltmeter 422 for detecting a potential difference (Va - Vc) between the voltage Va and the voltage Vc. The voltage Va is obtained at the first position P1 between the first thermistor 411 and the current limiting resistance Rs in the electric power supply path to the first thermistor 411. The voltage Vc is obtained at the second position P2 between the second resistance Rb and the first resistance Ra in the electric power supply path to the second thermistor 412. A switching element that is not shown is provided in the electric circuit 42. The switching element is turned on if current is supplied to each of the thermistors 411 and 412, while being turned off if current is not supplied to each of the thermistors 411 and 412. According to the present embodiment, the voltage Va at the first position P1 corresponds to the voltage applied to the first thermistor 411, and the voltage Vc at the second position P2 corresponds to the voltage applied to the second thermistor 412.

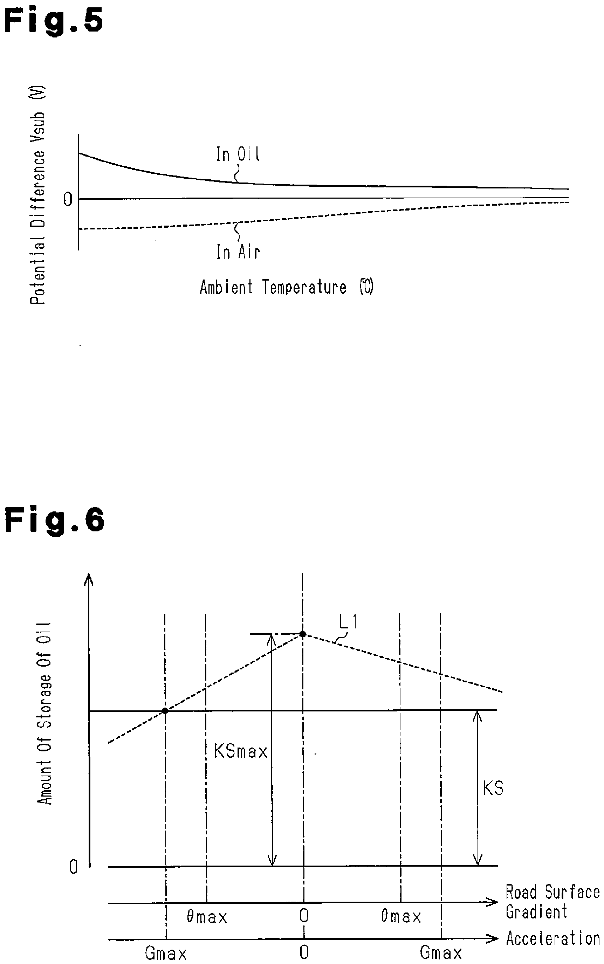

In the situation where the thermistors 411 and 412 are provided under an environment where a gas scarcely flows, if the thermistors 411 and 412 are in the gas, i.e., if the thermistors 411 and 412 are not immersed in the oil, the amount of heat dissipation of the first thermistor 411 is greater than the amount of heat dissipation of the second thermistor 412. Accordingly, the resistance value of the first thermistor 411 is reduced, and the voltage Va at the first position P1 is lowered. As a result, as shown by a dashed line in Fig. 5, the potential difference Vsub is a negative value. In contrast, if the thermistors 411 and 412 are immersed in the oil, the amount of heat dissipation of the first thermistor 411 is less than the amount of heat dissipation of the second thermistor 412. Accordingly, the resistance value of the first thermistor 411 is not reduced, and the voltage Va at the first position P1 is increased. As a result, as shown by a solid line in Fig. 5, the potential difference Vsub is a positive value. However, as obvious from Fig. 5, the absolute value of the potential difference Vsub is gradually reduced as the ambient temperature of the thermistors is high.

During the running of the vehicle, even if the amount of storage of the oil in the drain tank 35 is constant, the position of the liquid surface in the drain tank 35 can be changed. For example, if the gradient of the road surface on which the vehicle runs is steep, the topmost position of the liquid surface comes into a higher position in the vertical direction in comparison to the case where the gradient is gradual. When the acceleration/deceleration that effects the vehicle is high such as when the vehicle is accelerated, decelerated and turns, the topmost position of the liquid surface is higher in the vertical direction than that in the case where the acceleration/deceleration is low.

That is, in the case where the vehicle is stopped on the road surface that is parallel with a horizontal plane, even if the oil currently stored in the drain tank 35 does not adhere to the element 36, the oil in the drain tank 35 may contact the element 36 when the vehicle is located on the ramp with a steep gradient or when the vehicle is accelerated, decelerated or steeply turns. In this case, the oil that is in contact with the element 36 is likely to be drawn into the delivery pipe 24 together with the CNG that passes through the element 36.

Accordingly, in the present embodiment, as shown in Fig. 6, a detection mechanism 41 is provided at a position that satisfies the following two conditions.

### The first condition

When the gradient of the road surface on which the vehicle runs is equivalent to the gradient maximum value θmax (e.g., 22°) to be expected, the oil in the drain tank 35 is located at a position at which the oil is out of contact with the lower end of the element 36 in the vertical direction.

### The second condition

When the acceleration/deceleration generated at the time of running of the vehicle is equivalent to a maximum acceleration/deceleration value Gmax (e.g., 0.6 G) to be expected, the oil in the drain tank 35 is at a position at which the oil is out of contact with the lower end of the element 36 in the vertical direction.

The boundary line L1 shown by a dashed line in Fig. 6 is a line that shows the boundary in which whether the oil in the drain tank 35 is in contact with the element 36. That is, in the case where the gradient of the road surface is zero and the vehicle is stopped, the oil in the drain tank 35 comes into contact with the element 36 if the amount of storage of the oil is increased to a maximum storage amount KSmax that is greater than the prescribed amount KS. In contrast, in the case where the acceleration/deceleration of the vehicle is equivalent to the maximum acceleration/deceleration value Gmax, when the amount of storage of the oil exceeds the prescribed amount KS, the oil in the drain tank 35 comes into contact with the element 36. In the case where the road surface gradient is equivalent to the maximum gradient value θmax, the oil in the drain tank 35 is not yet in contact with the element 36 at the time when the amount of storage of the oil exceeds the prescribed amount KS. However, the oil in the drain tank 35 comes into contact with the element 36 before the amount of storage exceeds the maximum storage amount KSmax. Accordingly, in the present embodiment, the detection mechanism 41 is attached to the side wall 351 of the drain tank 35 at a position in which the detection mechanism 41 detects the point in time when the amount of storage of the oil exceeds the prescribed amount KS.

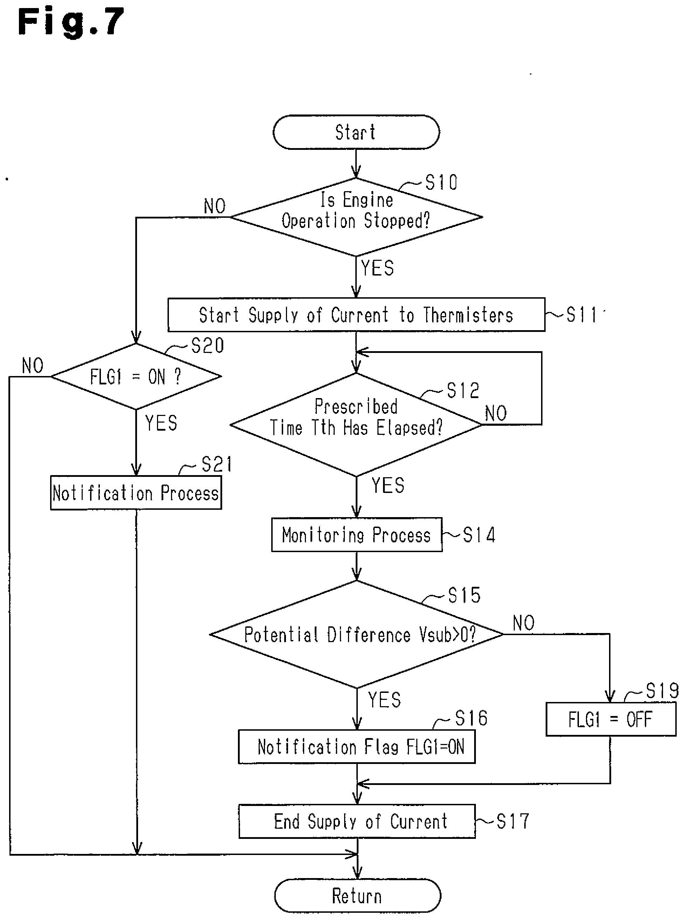

Next, the process routine that the controller 25 performs to monitor the amount of storage of the oil in the drain tank 35 will be described with reference to the flowchart shown in Fig. 7. The present process routine is performed when the vehicle is in a stopped state.

In the present process routine shown in Fig. 7, the controller 25 determines whether the ignition switch of the vehicle is turned off, i.e., whether the engine operation is stopped (step S10). If the engine operation is stopped, the supply of current to the electromagnetic shut-off valve 32 of the regulator 23 is inhibited so that the CNG does not flow into the drain tank 35.

If the engine is in a stopped state (step S10: YES), the controller 25 controls the electric circuit 42 to start the supply of current to each of the thermistors 411 and 412 (step S11). The controller 25 then determines whether the prescribed time Tth (e.g., 60 seconds) has elapsed after the start of supply of current to each of the thermistors 411 and 412 (step S12). The prescribed time Tth is set for determining whether the thermistors 411 and 412 are capable of generating sufficient heat.

If the prescribed time Tth is not elapsed (step S12: NO), the controller 25 repeats the determination process in step S12 until the prescribed time Tth has elapsed. In contrast, if the prescribed time Tth has elapsed (step S12: YES), the controller 25 performs a monitoring process to obtain the potential difference Vsub (Va - Vc) using the voltmeter 422 (step S 14).

The controller 25 then determines whether the obtained potential difference Vsub is a positive value (step S 15). If the potential difference Vsub is a positive value (step S15: YES), it is determined that the thermistors 411 and 412 are immersed in the oil. Accordingly, the controller 25 turns a notification flag FLG1 on (step S16), and controls the electric circuit 42 to end the supply of current to each of the thermistors 411 and 412 (step S 17). The controller 25 then ends the present process routine. The information whether the notification flag FLG1 is on or off is stored in a non-volatile memory provided in the controller 25.

In contrast, if the potential difference Vsub is not a positive value (step S15: NO), it is determined that the thermistors 411 and 412 are not immersed in the oil. Accordingly, the controller 25 turns the notification flag FLG1 off (step S19), and the process proceeds to above step S 17.

On the other hand, if the engine is in operation (step S10: NO), the CNG that has passed through the regulator 23 (i.e., the element 36) is supplied to the injector 14. Accordingly, the controller 25 does not perform the monitoring process. The controller 25 then determines whether the notification flag FLG1 is on based on the information stored in the non-volatile memory (step S20). If the notification flag FLAG1 is off (step S20: NO), the controller 25 temporarily terminates the present process routine without performing a notification process. In contrast, if the notification flag FLAG1 is on (step S20: YES), the controller 25 performs the notification process, which lights up the alert lamp 26 (step S21), and temporarily terminates the present process routine.

Next, the operation for supplying the CNG to the delivery pipe 24 will be described.

The CNG that has flowed from the CNG tank 21 into the high-pressure fuel line 22 is supplied through the regulator 23 to the delivery pipe 24. At this time, in the regulator 23, the pressure of the CNG is reduced to a prescribed fuel pressure when the CNG passes through the electromagnetic shut-off valve 32 and the reducing valve 33. The CNG then flows into the drain tank 35. The oil contained in the CNG is separated from the CNG by the element 36 located in the upper area in the drain tank 35. The CNG that has passed through the element 36 is then drawn into the delivery pipe 24. This supplies the CNG that scarcely contains the oil to the injector 14 so that the operation failure of the injector 14 due to the adhesion of the oil is less likely to occur.

In contrast, the separated oil from the CNG by the element 36 is stored in the drain tank 35. If the engine operation using the CNG continues, the amount of storage of the oil in the drain tank 35 gradually increases and the liquid surface is gradually raised in the drain tank 35 as described above.

The detection mechanism 41 for detecting the position of the liquid surface is provided in the drain tank 35. The detection mechanism 41 is provided at a position that satisfies the above conditions. Accordingly, in the case where the vehicle is stopped on the road surface that is parallel with a horizontal plane, when the thermistors 411 and 412, which configure the detection mechanism 41, are not immersed in the oil, i.e., when the potential difference Vsub is a negative value, the oil in the drain tank 35 is highly less likely to contact the element 36 located in the upper area in the drain tank 35 even if the vehicle is then rapidly accelerated or steeply turns. Even if the vehicle runs on a ramp, the oil stored in the drain tank 35 is less likely to contact the element 36.

Even after this, when the engine operation using the CNG is performed and the amount of storage of the oil in the drain tank 35 is increased, the thermistors 411 and 412 are immersed in the oil due to the raising of the liquid surface. If the ignition switch is turned off in this state, the process routine shown in Fig. 7 is performed. At this time, the potential difference Vsub is a positive value and the notification flag FLG1 is on. Since the notification flag FLG1 is on, the alert lamp 26 provided in the vehicle is lit when the ignition switch is then turned on.

If the notification flag FLG1 is off when the ignition switch is turned on, the amount of storage of the oil in the drain tank 35 is determined to be less than the prescribed amount, and the alert lamp 26 is not lit.

If the valve 37 is removed from the drain tank 35 so that the opening 352 is opened, the oil in the drain tank 35 is discharged outside. The liquid surface in the drain tank 35 is then lowered. As a result, the thermistors 411 and 412 are not immersed in the oil. If the ignition switch is turned off in this state, the monitoring process is performed. Then, since the potential difference Vsub is a negative value, the notification flag FLG1 is turned off. Accordingly, if the ignition switch is then turned on, the alert lamp 26 is not lit.

As described above, the present embodiment has the following advantages.
(1) The detection mechanism 41 according to the present embodiment is fixed to the side wall 351 of the drain tank 35. Accordingly, in comparison to the conventional case where the sensor is provided on the float, the wirings of the thermistors 411 and 412 each corresponding to the sensor are less likely to be broken. In comparison to the conventional case where the float that fluctuates is provided in the drain tank, a mechanism that guides the float or the movement of the float may be omitted. Accordingly, the amount of storage of the oil in the drain tank 35 is detected with a simple structure. Since the detection mechanism 41 has no moving member, the generation of noise from within the drain tank 35 is limited.
(2) If it is assumed that the oil stored in the drain tank 35 is in contact with the element 36, a part of the oil that is in contact with the element 36 is likely to be drawn into the delivery pipe 24 with the CNG that has passed through the element 36. In this case, a large amount of oil adheres to the injector 14 so that the operation failure of the injector 14 is likely to occur. Regarding this, in the present embodiment, since the detection mechanism 41 is located at the position that satisfies the above two conditions, the alert lamp 26 is lit in the stage prior to the contact of the oil in the drain tank 35 with the element 36.
(3) The thermistors 411 and 412, which configure the detection mechanism 41, are supported by the side wall 351 of the drain tank 35 through the O-ring 39, which has a heat insulation performance. This limits the movement of the heat generated by the thermistors 411 and 412 according to the supply of current toward the side wall 351. This rapidly increases the temperature of the thermistors 411 and 412 from the start of the supply of current so that the detection of the amount of storage of the oil using the thermistors 411 and 412 is rapidly started.
(4) According to the present embodiment, the monitoring process is performed when the vehicle is stopped (specifically, when the engine operation using the CNG is not performed). Accordingly, in comparison to the case where the monitoring process is performed during the running of the vehicle, the detection accuracy of the amount of storage of the oil in the drain tank 35 is improved because the monitoring process is performed in the state where the liquid surface is less likely to change.
   Since the monitoring process is performed after the engine operation is stopped as described above, the gas that contains the CNG scarcely flows into the drain tank 35 when the monitoring process is performed. Accordingly, the monitoring process is performed in the state where the CNG scarcely flows in the drain tank 35 and the pressure in the drain tank 35 is substantially constant. As a result, the detection accuracy of the amount of storage of the oil in the drain tank 35 is improved because the monitoring process is performed in the state where the heat dissipation coefficient of the first thermistor 411 scarcely changes.
(5) Further, the monitoring process is performed for a period that is longer than the prescribed time Tth after the supply of current to the thermistors 411 and 412 continues. That is, the monitoring process is performed after the thermistors 411 and 412 generate sufficient heat. This improves the detection accuracy of the position of the liquid surface of the oil stored in the drain tank 35.
(6) Moreover, in the present embodiment, when the monitoring process is performed, the supply of current to the thermistors 411 and 412 is inhibited. Accordingly, regardless of the presence or absence of the performing of the monitoring process, the lives of the thermistors 411 and 412 are prolonged in comparison to the case where the current is continuously supplied to the thermistors 411 and 412.
(7) As a method of lighting up the alert lamp 26, a method of automatically lighting up the alert lamp 26 when the distance of running of the vehicle is greater than or equal to the predetermined distance is considered. However, in this case, the alert lamp 26 may be lit even if the amount of storage of the oil in the drain tank 35 is below the prescribed amount, or the alert lamp 26 may remain off even if the element 36 is immersed in the oil. In this regard, in the present embodiment, the amount of storage of the oil is actually measured by the detection device 38 to determine whether the amount of storage of the oil is greater than or equal to the prescribed amount, and the alert lamp 26 is lit based on the obtained result. Accordingly, the alert lamp 26 is restricted from unnecessarily being lit, and the delay of the lighting timing of the alert lamp 26 is limited.

### Second Embodiment

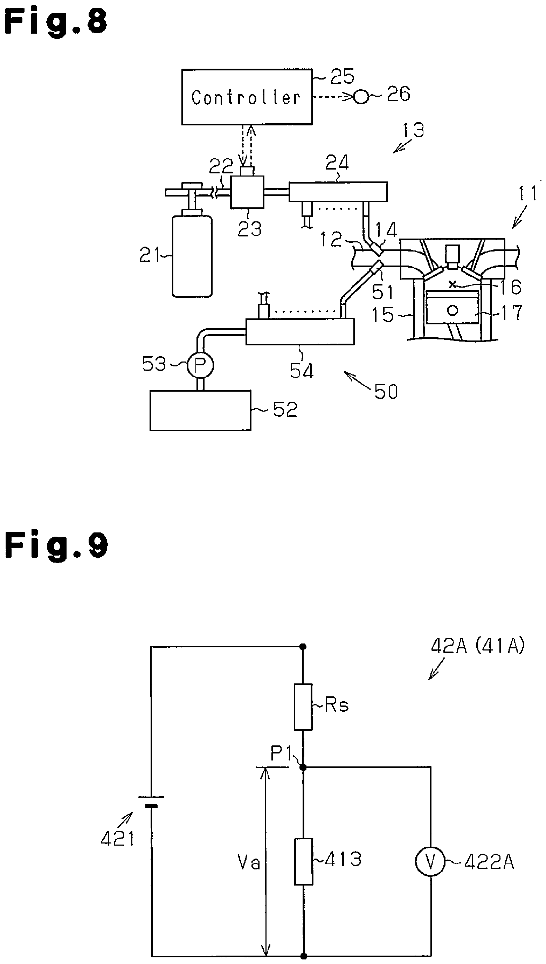

Next, a second embodiment of the present invention will be described according to Figs. 8 to 11. The second embodiment differs from the first embodiment in that the internal combustion engine uses not only CNG but also gasoline as fuel, and the detection mechanism is configured to include only one thermistor. Accordingly, in the following description, the differences from the first embodiment will mainly be discussed, and like or the same reference numerals are given to those components that are like or the same as the corresponding components of the first embodiment.

As shown in Fig. 8, in addition to the injector 14, which injects CNG, an injector 51 that injects the gasoline as liquid fuel supplied from a gasoline supply device 50 is provided in the intake passage 12 of the internal combustion engine 11. The gasoline supply device 50 includes a fuel pump 53, which draws the gasoline from within a gasoline tank 52, and a delivery pipe 54 to which the gasoline discharged from the fuel pump 53 is delivered in a pressurized state. The gasoline supplied from the delivery pipe 54 is injected through the injector 51 into the intake passage 12. That is, the internal combustion engine 11 according to the present embodiment is a bi-fuel type internal combustion engine.

In the internal combustion engine 11, at the start of the engine operation, the gasoline is supplied into the combustion chamber 16 of the cylinder 15. If the following conditions are satisfied, for example, the fuel to be supplied to the combustion chamber 16 is switched from gasoline to CNG.

The prescribed time (e.g., 60 seconds) has elapsed from the start of the engine operation based on the supply of gasoline.

The vehicle is in a stopped state.

Next, a detection mechanism that configures the detection device 38 according to the present embodiment will be described with reference to Fig. 9.

As shown in Fig. 9, a detection mechanism 41A according to the present embodiment includes a detection thermistor 413 that generates heat according to the supply of current, and an electric circuit 42A for supplying current to the detection thermistor 413. The electric circuit 42A includes a power supply 421 with DC 24 V, a current limiting resistance Rs connected in series to the detection thermistor 413, and a voltmeter 422A for detecting the voltage Va applied to the detection thermistor 413. Further, the electric circuit 42A includes a switching element that is not shown. The switching element is turned on when the current is supplied to the detection thermistor 413, and is turned off when the current is not supplied to the detection thermistor 413. The resistance value of the current limiting resistance Rs is 500 Ω as an example.

The detection thermistor 413 is configured such that the heat dissipation constant of the detection thermistor 413 when the detection thermistor 413 generates heat in liquid (in oil) is further greater than the heat dissipation constant of the detection thermistor 413 when the detection thermistor 413 generates heat in air. An example of the detection thermistor 413 is a glass-sealed thermistor with a resistance value of 2 kΩ and a B constant (B25/50) of 3500 K at 25°C.

The detection thermistor 413 according to the present embodiment further includes the following advantages. That is, when the detection thermistor 413 is immersed in the oil, the heat dissipation constant of the detection thermistor 413 is less likely to change even if the temperature of the CNG that flows into the drain tank 35 is either low or high. The heat dissipation constant of the detection thermistor 413 is less likely to change even if the flow rate, i.e., the flow speed of the CNG in the drain tank 35 changes.

In contrast, if the detection thermistor 413 is not immersed in the oil, there is a significant difference of the heat dissipation constants of the detection thermistor 413 between the case where the temperature of the CNG that flows into the drain tank 35 is low and the case where the temperature is high. Even if the temperature of the CNG that flows into the drain tank 35 is constant, the heat dissipation constant of the detection thermistor 413 changes depending on the flow rate of the CNG in the drain tank 35. The greater the flow velocity, i.e., the flow rate of the CNG is, the greater the heat dissipation constant of the detection thermistor 413 according to the present embodiment becomes.

It is assumed that the power supply voltage is 12 V, the fuel pressure of the delivery pipe 24 for the CNG is 9.5 MPa, and the ambient temperature of the detection thermistor 413 is 15°C, for example. In this case, if the flow rate of the CNG in the drain tank 35 is 1.3 m³/h, the heat dissipation constant of the detection thermistor 413 is 3.5 mW/°C. If the flow rate of the CNG is 9.5 m³/h, the heat dissipation constant of the detection thermistor 413 is 4.3 mW/°C.

That is, the greater the flow velocity, i.e., the flow rate of the CNG is, the less the temperature of the detection thermistor 413 is likely to be high. The greater the flow rate, i.e., the flow speed of the CNG is, the more the voltage Va applied to the detection thermistor 413 is likely to be high.

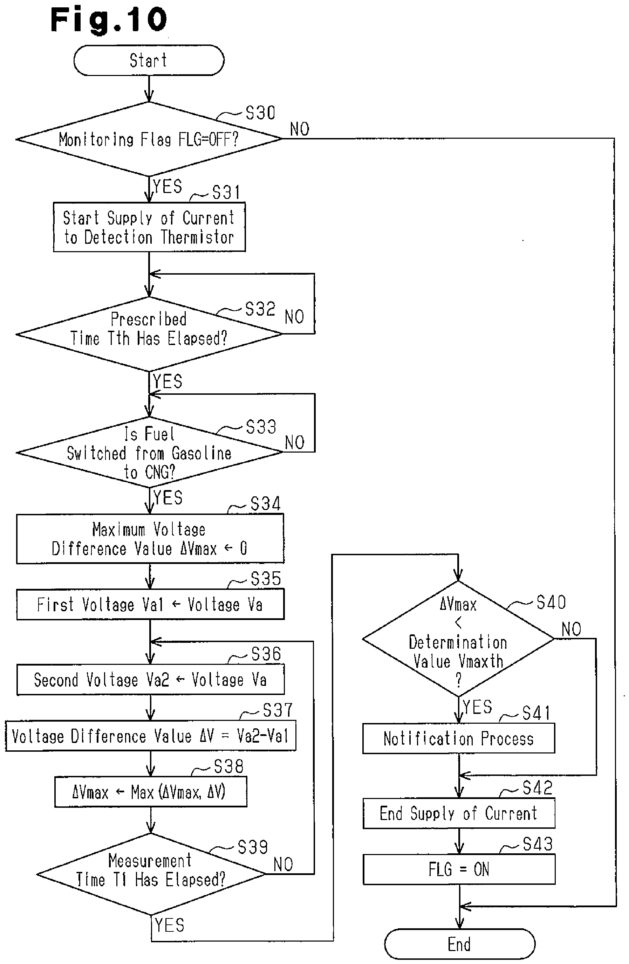

Next, the process routine that the controller 25 performs to monitor the amount of storage of the oil in the drain tank 35 will be described with reference to the flowchart shown in Fig. 10. The process routine is performed if the ignition switch is turned on.

In the process routine shown in Fig. 10, the controller 25 determines whether the monitoring flag FLG is off (step S30). The monitoring flag FLG is set such that the monitoring flag FLG is turned off if the monitoring process for monitoring the amount of storage of the oil in the drain tank 35 is never performed after the ignition switch is turned on, and the monitoring flag FLG is turned on if the monitoring process is performed. If the monitoring flag FLG is on (step S30: NO), the controller 25 ends the present process routine.

In contrast, if the monitoring flag FLG is off (step S30: YES), the controller 25 controls the electric circuit 42A to start the supply of current to the detection thermistor 413 (step S31). The controller 25 then determines whether the prescribed time Tth (e.g., 60 seconds) has elapsed after the current had started to be supplied to the detection thermistor 413 (step S32). The prescribed time Tth is set such that the detection thermistor 413 fully generates heat and in accordance with the timing at which the fuel supplied to the combustion chamber 16 may be switched from gasoline to CNG.

If the prescribed time Tth is not elapsed (step S32: NO), the controller 25 repeats the determination process in step S32 until the prescribed time Tth has elapsed. In contrast, if the prescribed time Tth has elapsed (step S32: YES), the controller 25 determines whether the fuel supplied to the combustion chamber 16 is switched from gasoline to CNG (step S33). If the gasoline is still supplied to the combustion chamber 16 (step S33: NO), the controller 25 repeats the determination process in step S33 until CNG is supplied to the combustion chamber 16.

In contrast, if CNG is supplied to the combustion chamber 16 (step S33: YES), the controller 25 sets a maximum voltage difference value ΔVmax to zero (step S34). The controller 25 then sets the first voltage Va1 to the voltage Va at the time when the fuel supplied to the combustion chamber 16 is switched from gasoline to CNG (or immediately before switching to CNG) (step S35). The voltage Va is a voltage applied to the detection thermistor 413.

The controller 25 detects the voltage Va currently applied to the detection thermistor 413, and sets the second voltage Va2 as the current voltage Va (step S36). The controller 25 then computes the voltage difference ΔV (= Va2-Va1) by subtracting the first voltage Va1 from the second voltage Va2 (step S37), and updates the maximum voltage difference value ΔVmax (step S38). That is, in step S38, the maximum voltage difference value ΔVmax at the time is compared with the voltage difference ΔV computed in step S37, and the newest maximum voltage difference value ΔVmax is updated by the value that is greater than the other one. The controller 25 then determines whether the measured time T1 (e.g., 10 seconds) has elapsed from the start of the supply of the CNG to the combustion chamber 16 (step S39).

If the measured time T1 is not elapsed (step S39: NO), the controller 25 sets the process to the above step S36. In contrast, if the measured time T1 has elapsed (step S39: YES), the controller 25 determines whether the maximum voltage difference value ΔVmax updated in step S38 is less than the determination value Vmaxth (step S40). It is preferable that the determination value Vmaxth be set to a greater value as the ambient temperature of the installed detection thermistor 413 is higher. For example, when the ambient temperature of the installation is 25°C, the determination value Vmaxth is set to 0.6.

If the maximum voltage difference value ΔVmax is less than the determination value Vmaxth (step S40: YES), it is determined that the detection thermistor 413 is immersed in the oil. Accordingly, the controller 25 performs the notification process for lighting up the alert lamp 26 (step S41), and sets the process to next step S42. In contrast, if the maximum voltage difference value ΔVmax is greater than or equal to the determination value Vmaxth (step S40: NO), it is determined that the detection thermistor 413 is not immersed in the oil. Accordingly, the controller 25 sets the process to next step S42 without performing the monitoring process.

In step S42, the controller 25 ends the supply of current to the detection thermistor 413. The controller 25 then sets the monitoring flag FLG on (step S43), and ends the present process routine.

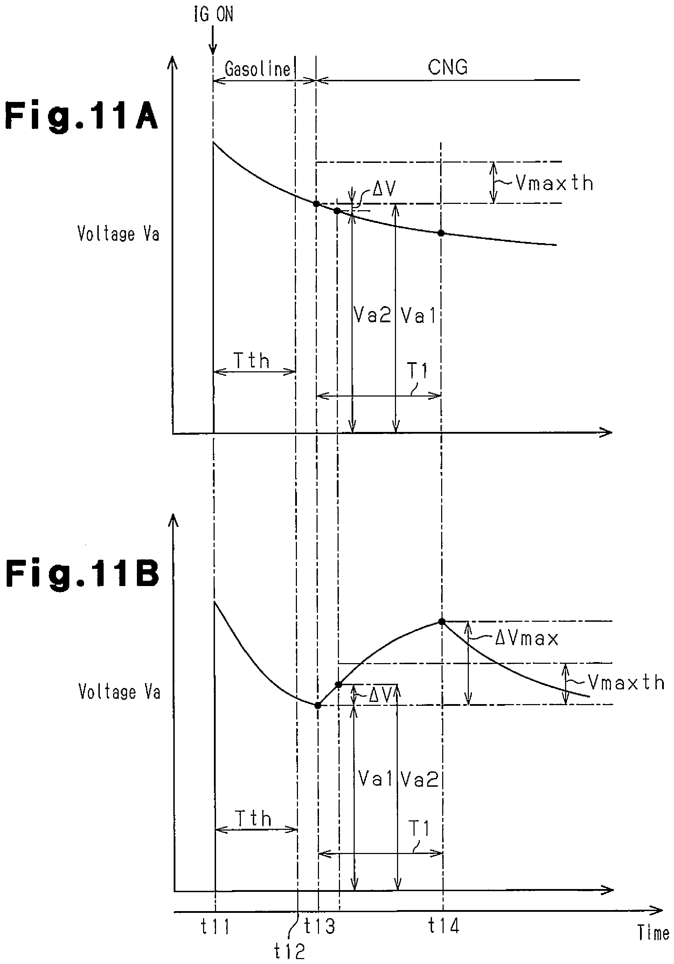

Next, the operation after the start of the engine operation will be described with reference to the timing chart shown in Fig. 11.

First, the case where the detection thermistor 413 is immersed in the oil will be described with reference to Fig. 11A.

As shown in Fig. 11A, when the engine operation is started at the first point in time t11, the gasoline is supplied to the combustion chamber 16. If the engine operation is started as described above, the supply of current to the detection thermistor 413 is also started. The prescribed time Tth has elapsed from the first point in time t11, it is determined that the detection thermistor 413 generates sufficient heat (the second point in time t12). If the vehicle is then stopped at the third point in time t13, the fuel supplied to the combustion chamber 16 at this point in time is switched from the gasoline to the CNG. Then, the voltage Va at this time is set to the first voltage Va1.

The voltage Va is detected for every predetermined cycle and the newest voltage Va is set as the second voltage Va2 until the measurement time T1 has elapsed from the third point in time t13. The voltage difference value ΔV between the first voltage Va1 and the second voltage Va2 is then computed.

If the detection thermistor 413 is immersed in the oil, the voltage Va is less likely to be effected even if the flow of the CNG occurs in the drain tank 35. Accordingly, even if the CNG flows into the drain tank 35, the heat dissipation constant of the detection thermistor 413 is less likely to change. Further, as obvious from Fig. 11A, the voltage Va is less as the time has elapsed. This maintains the maximum voltage difference value ΔVmax as zero. As a result, the maximum voltage difference value ΔVmax at the fourth point in time t14 in which the measurement time T1 has elapsed is less than the determination value Vmaxth. This lights the alert lamp 26.

Next, the case where the detection thermistor 413 is not immersed in the oil will be described with reference to Fig. 11B.

If CNG is supplied to the combustion chamber 16 at the third point in time t13 as shown in Fig. 11B, the CNG flows into the drain tank 35. The detection thermistor 413 is then located in the flow of the CNG. Accordingly, the heat dissipation constant of the detection thermistor 413 is greater than the heat dissipation constant prior to the third point in time t13 in which the CNG starts to be supplied. As a result, the voltage Va applied to the detection thermistor 413 is high, and the maximum voltage difference value ΔVmax is gradually greater as the time has elapsed.

The maximum voltage difference value ΔVmax at the fourth point in time t14 in which the measurement time T1 has elapsed from the third point in time t13 is greater than or equal to the determination value Vmaxth. Accordingly, the alert lamp 26 is not lit.

As described above, in addition to the advantages (1) to (3) and (5) to (7) in the above first embodiment, the present embodiment further has the following advantage.

(8) In the present embodiment, it is determined whether the amount of storage of the oil in the drain tank 35 is greater than or equal to the prescribed amount based on the comparison between the voltage Va (=Va2) in the case where the gas containing CNG flows in the drain tank 35 and the voltage Va (=Va1) in the case where the gas does not flow. Accordingly, the monitoring process is performed during the engine operation.

Each of the above embodiments may be modified to other embodiments as shown below.

In each of the embodiments, the notification process may be any method other than the lighting up of the alert lamp 26 as long as the occupants of the vehicle are notified of the fact that the amount of storage of the oil in the drain tank 35 is greater than or equal to the prescribed amount. For example, the notification may be made according to the voice sound. Further, if a monitor such as a navigation device is provided in the vehicle, a message "the amount of storage of the oil in the drain tank 35 is greater than or equal to the prescribed amount" may be displayed on the monitor.

As for the method of detecting the stopping of the vehicle, a method of detecting at least one of the facts that the shift range of the automatic transmission of the vehicle is located in the parking range (that is, the parking lock is applied to the automatic transmission), that the parking brake is applied to the vehicle, and that the vehicle speed is zero is used.

In each of the embodiments, the process routine shown in Figs. 7 and 10 may be performed if the road surface on which the vehicle runs is parallel with a horizontal plane. That is, when the gradient of the road surface is less than the prescribed gradient, the process routine shown in Figs. 7 and 10 may be performed. As for the method of estimating the gradient of the road surface, a method of estimating the gradient based on the detection signals from the front-back direction acceleration sensor provided in the vehicle may be used.

In the second embodiment, the switching of the fuel supplied to the combustion chamber 16 from gasoline to CNG may be performed during the running of the vehicle. In this case, the monitoring process may be performed during the running of the vehicle.

In the second embodiment, the vehicle may be configured such that not gasoline but CNG is supplied at the start of the engine operation. If CNG is supplied at the start of the engine operation as described above, it is preferable that the process routine shown in Fig. 10 not be performed.

In the first embodiment, the internal combustion engine 11 may be a bi-fuel type internal combustion engine. The current may start to be supplied to each of the thermistors 411 and 412 at the time when the ignition switch is turned on. After the monitoring process using the thermistors 411 and 412 is performed, the fuel supplied to the combustion chamber 16 may be switched from the gasoline to the CNG. In this case, the monitoring process may be performed during the running of the vehicle as long as the engine operation according to the supply of the gasoline is performed.

In each of the embodiments, the separating portion may be of any configurations other than the element 36 as long as the separating portion is capable of separating oil from CNG. For example, the separating portion may be configured such that a rotary fan is rotated to separate oil from CNG.

In the first embodiment, as long as the detection mechanism is capable of outputting signals of different aspects in the case where the detection mechanism is immersed in the oil and in the case where the detection mechanism is not immersed in the oil, the detection mechanism may be configured to be out of the thermistor. As for the detection mechanism, a detection mechanism that includes an electrostatic capacitance type sensor may be used, for example.

As for the gaseous fuel, a gaseous fuel other than CNG (e.g., hydrogen gas) may be used as long as the gaseous fuel is a gas that is burned in the combustion chamber 16 in the cylinder 15.

## Claims

1. An oil separator comprising:
a separating portion (36), which separates oil contained in a gaseous fuel from the gaseous fuel;
a drain tank (35), which stores the separated oil; and
a detection mechanism (41), which detects an amount of storage of the oil in the drain tank (35), wherein the separating portion (36) is located in an upper area in the drain tank (35) in a vertical direction, **characterized in that**
the detection mechanism (41) is fixed to a side wall of the drain tank (35) such that the detection mechanism (41) is located at a position that is lower than the position of the separating portion in the drain thank in the vertical direction, wherein the detection mechanism (41) is capable of outputting different signals in accordance with a type of fluid that the detection mechanism contacts, the detection mechanism includes a first thermistor (411) and a second thermistor (412) that generate heat according to a supply of current, and
the detection mechanism (41) is configured such that, in a state where the gaseous fuel that has passed through the separating portion is not supplied to an engine,
a voltage (Va) applied to the first thermistor (411) is lower than a voltage (Vc) applied to the second thermistor (412) when the first and second thermistors are not immersed in the oil, and
the voltage (Va) applied to the first thermistor (411) is higher than the voltage applied to the second thermistor (412) when the first and second thermistors are immersed in the oil.

2. The oil separator according to claim 1, wherein
the oil separator is mounted on a vehicle, and
the detection mechanism (41) is located at a position that is lower than a position of the separating portion in the vertical direction even in a case where a gradient of a road surface on which the vehicle runs is an expected maximum value of 22°.

3. The oil separator according to claim 1 or 2, wherein
the oil separator is mounted on a vehicle,
the detection mechanism (41) is located at positions
below and above a position of a liquid surface of the oil in the drain tank (35) in the vertical direction and the separating portion is located at positions above a position of the liquid surface of the oil in the drain tank (35) in the vertical direction, in a case where acceleration/deceleration occurred during running of the vehicle is an expected maximum value of 5.9 m/s² (0.6 G).

4. The oil separator according to claim 1, wherein
a communicating hole (353) that passes through a side wall of the drain tank is formed in the side wall, and
the first and second thermistors (411, 412) are supported by the communicating hole in the side wall with a heat insulation material located between a circumferential wall of the communicating hole and the first and second thermistors.

5. The oil separator according to claim 1 or 4, wherein
when the first and second thermistors are in gas, an amount of heat dissipation of the first thermistor is greater than an amount of heat dissipation of the second thermistor, and
when the first and second thermistors are in liquid, the amount of heat dissipation of the first thermistor is less than the amount of heat dissipation of the second thermistor.

6. The oil separator according to any one of claims 1 to 3, wherein
the detection mechanism includes a detection thermistor (413) that generates heat when supplied with current, and
the detection thermistor is configured to have a heat dissipation coefficient that has a value in accordance with a flow rate of the gaseous fuel that flows in the drain tank.

7. The oil separator according to claim 6, wherein
a communicating hole (353) that passes through a side wall of the drain tank is formed in the side wall, and
the detection thermistor is supported by the communicating hole in the side wall with heat insulation material located between the detection thermistor and a circumferential wall of the communicating hole.

8. A gaseous fuel supply device comprising:
the oil separator according to claim 2 or 3; and
a controller that performs a monitoring process in which an amount of storage of the oil in the drain tank is monitored based on a detection result by the detection mechanism when the vehicle is stopped.

9. A gaseous fuel supply device comprising:
the oil separator according to claim 1; and
a controller that performs a monitoring process in which an amount of storage of the oil in the drain tank is monitored based on a difference of the voltages applied to the first and second thermistors when the gaseous fuel that has passed through the separating portion is not supplied to an engine.

10. The gaseous fuel supply device according to claim 9, wherein the controller performs the monitoring process after a prescribed time has elapsed from a start of supply of current to the first and second thermistors.

11. The gaseous fuel supply device according to claim 9 or 10, wherein when the monitoring process is ended, the controller inhibits the supply of current to the first and second thermistors.

12. A gaseous fuel supply device comprising:
the oil separator according to claim 6; and
a controller (25) that performs a monitoring process in which an amount of storage of the oil in the drain tank is monitored based on a change of the voltage applied to the detection thermistor when the gaseous fuel that has passed through the separating portion starts to be supplied to an engine.

13. The gaseous fuel supply device according to claim 12, wherein the controller performs the monitoring process after a prescribed time has elapsed from a start of supply of current to the detection thermistor.

14. The gaseous fuel supply device according to claim 12 or 13, wherein when the monitoring process is ended, the controller inhibits the supply of current to the detection thermistor.

15. The gaseous fuel supply device according to any one of claims 9 to 14, wherein if the controller determines that the amount of storage of the oil in the drain tank has exceeded a prescribed amount through the monitoring process, the controller reports the determination.

## Patentansprüche

1. Ölabscheider umfassend:
einen Abscheideteil (36), der in einem gasförmigen Brennstoff enthaltenes Öl von dem gasförmigen Brennstoff abscheidet;
einen Ablauftank (35), der das abgeschiedene Öl speichert; und
einen Erkennungsmechanismus (41), der eine Speichermenge des Öls im Ablauftank (35) erkennt, wobei sich der Abscheideteil (36) in einem oberen Bereich in dem Ablauftank (35) in einer vertikalen Richtung befindet, **dadurch gekennzeichnet dass**
der Erkennungsmechanismus (41) an einer Seitenwand des Ablauftanks (35) so fixiert ist, dass sich der Erkennungsmechanismus (41) in einer Position, die niedriger ist als die Position des Abscheideteils in dem Ablauftank in der vertikalen Richtung, befindet, wobei der Erkennungsmechanismus (41) fähig ist, verschiedene Signale entsprechend einer Art von Flüssigkeit, die der Erkennungsmechanismus kontaktiert, auszugeben,
der Erkennungsmechanismus einen ersten Thermistor (411) und einen zweiten Thermistor (412), die Wärme entsprechend einer Stromzufuhr generieren, beinhaltet, und
der Erkennungsmechanismus (41) so konfiguriert ist, dass in einem Zustand, in welchem der gasförmige Brennstoff, der den Abscheideteil durchlaufen hat, nicht einem Motor zugeführt wird,
eine Spannung (Va), die an den ersten Thermistor (411) angelegt wird, niedriger ist als eine Spannung (Vc), die an den zweiten Thermistor (412) angelegt wird, wenn der erste und zweite Thermistor nicht in das Öl eingetaucht sind, und
die Spannung (Va), die an den ersten Thermistor (411) angelegt wird, höher ist als die Spannung (Vc), die an den zweiten Thermistor (412) angelegt wird, wenn der erste und zweite Thermistor in das Öl eingetaucht sind.

2. Der Ölabscheider nach Anspruch 1, wobei
der Ölabscheider auf einem Fahrzeug montiert ist, und
der Erkennungsmechanismus (41) sich in einer Position, die niedriger als eine Position des Abscheideteils in der vertikalen Richtung ist, befindet, sogar in einem Fall, in dem eine Steigung einer Straßenoberfläche, auf welcher das Fahrzeug fährt, einen erwarteten Maximalwert von 22° beträgt.

3. Der Ölabscheider nach Anspruch 1 oder 2, wobei
der Ölabscheider auf einem Fahrzeug montiert ist,
der Erkennungsmechanismus (41) sich in Positionen unter und über einer Position einer Flüssigkeitsoberfläche des Öls in dem Ablauftank (35) in der vertikalen Richtung befindet, und der Abscheideteil sich in Positionen über der Position der Flüssigkeitsoberfläche des Öls in dem Ablauftank (35) in der vertikalen Richtung befindet, in einem Fall, dass Beschleunigung/Verlangsamung, die während der Fahrt des Fahrzeugs geschieht, einen erwarteten Maximalwert von 5.9 m/s² (0.6 G) beträgt.

4. Der Ölabscheider nach Anspruch 1, wobei
ein Übermittlungsloch (353), dass eine Seitenwand des Ablauftanks durchdringt, in der Seitenwand gestaltet ist, und
der erste und zweite Thermistor (411, 412) von dem Übermittlungsloch in der Seitenwand mit einem Wärmedämmungsmaterial, dass sich zwischen einer umlaufenden Wand des Übermittlungslochs und dem ersten und zweiten Thermistor befindet, unterstützt werden.

5. Der Ölabscheider nach Anspruch 1 oder 4, wobei
wenn sich der erste und zweite Thermistor in Gas befinden, eine Menge an Wärmeabfuhr des ersten Thermistors größer ist als eine Menge an Wärmeabfuhr des zweiten Thermistors, und
wenn sich der erste und zweite Thermistor in Flüssigkeit befinden, die Menge an Wärmeabfuhr des ersten Thermistors weniger ist als die Menge an Wärmeabfuhr des zweiten Thermistors.

6. Der Ölabscheider nach einem der Ansprüche 1 bis 3, wobei
der Erkennungsmechanismus einen Erkennungsthermistor (413) beinhaltet, der Wärme generiert, wenn Strom zugeführt wird, und
der Erkennungsthermistor konfiguriert ist, einen Wärmeabfuhrkoeffizienten zu haben, der einen Wert entsprechend eines Durchflusses des gasförmigen Brennstoffs, der in dem Ablauftank fließt, hat.

7. Der Ölabscheider nach Anspruch 6, wobei
ein Übermittlungsloch (353), dass eine Seitenwand des Ablauftanks durchdringt, in der Seitenwand gestaltet ist, und
der Erkennungsthermistor von dem Übermittlungsloch in der Seitenwand mit Wärmedämmungsmaterial, dass sich zwischen dem Erkennungsthermistor und einer umlaufenden Wand des Übermittlungslochs befindet, unterstützt wird.

8. Vorrichtung zur Zuführung von gasförmigem Brennstoff umfassend:
den Ölabscheider nach Anspruch 2 oder 3; und
einen Regler, der einen Überwachungsprozess ausführt, in dem eine Speichermenge des Öls in dem Ablauftank basierend auf einem Erkennungsresultat durch den Erkennungsmechanismus, wenn das Fahrzeug angehalten wird, überwacht wird.

9. Vorrichtung zur Zuführung von gasförmigem Brennstoff umfassend:
den Ölabscheider nach Anspruch 1; und
einen Regler, der einen Überwachungsprozess ausführt, in dem eine Speichermenge des Öls in dem Ablauftank basierend auf einer Differenz zwischen den Spannungen, die an den ersten und zweiten Thermistor angelegt werden, wenn der gasförmige Brennstoff, der den Abscheideteil durchlaufen hat, nicht einem Motor zugeführt wird, überwacht wird.

10. Die Vorrichtung zur Zuführung von gasförmigem Brennstoff nach Anspruch 9, wobei der Regler den Überwachungsprozess nachdem eine vorgeschriebene Zeit vom Beginn einer Stromzufuhr an den ersten und zweiten Thermistor an abgelaufen ist, durchführt.

11. Die Vorrichtung zur Zuführung von gasförmigem Brennstoff nach Anspruch 9 oder 10, wobei der Regler die Stromzufuhr an den ersten und zweiten Thermistor hemmt, wenn der Überwachungsprozess beendet ist.

12. Vorrichtung zur Zuführung von gasförmigem Brennstoff umfassend:
den Ölabscheider nach Anspruch 6; und
einen Regler (25), der einen Überwachungsprozess ausführt, in dem eine Speichermenge des Öls in dem Ablauftank basierend auf einer Änderung der Spannung, die an den Erkennungsthermistor angelegt wird, wenn der gasförmige Brennstoff, der den Abscheideteil durchlaufen hat, einem Motor zugeführt zu werden beginnt, überwacht wird.

13. Die Vorrichtung zur Zuführung von gasförmigem Brennstoff nach Anspruch 12, wobei der Regler den Überwachungsprozess nachdem eine vorgeschriebene Zeit vom Beginn einer Stromzufuhr an den Erkennungsthermistor an abgelaufen ist, durchführt.

14. Die Vorrichtung zur Zuführung von gasförmigem Brennstoff nach Anspruch 12 oder 13, wobei der Regler die Stromzufuhr an den Erkennungsthermistor hemmt, wenn der Überwachungsprozess beendet ist.

15. Die Vorrichtung zur Zuführung von gasförmigem Brennstoff nach einem der Ansprüche 9 bis 14, wobei, wenn der Regler durch den Überwachungsprozess feststellt, dass die Speichermenge des Öls in dem Ablauftank eine vorgeschriebene Menge überschritten hat, der Regler die Feststellung meldet.r

## Revendications

1. Séparateur d'huile comprenant :
une partie de séparation (36), laquelle sépare de l'huile contenue dans un combustible gazeux du combustible gazeux ;
un réservoir de drainage (35), lequel stocke l'huile séparée ; et
un mécanisme de détection (41), lequel détecte une quantité de stockage de l'huile dans le réservoir de drainage (35), sachant que la partie de séparation (36) est située dans une zone supérieure dans le réservoir de drainage (35) dans une direction verticale, **caractérisé en ce que** le mécanisme de détection (41) est fixé à une paroi latérale du réservoir de drainage (35) de telle sorte que le mécanisme de détection (41) soit situé dans une position qui est inférieure à la position de la partie de séparation dans le réservoir de drainage dans la direction verticale, sachant que le mécanisme de détection (41) est capable de sortir différents signaux selon un type de fluide avec lequel le mécanisme de détection est en contact, le mécanisme de détection inclut une première thermistance (411) et une deuxième thermistance (412) qui génèrent de la chaleur selon une alimentation en courant, et le mécanisme de détection (41) est configuré de telle sorte que, dans un état où le combustible gazeux qui est passé à travers la partie de séparation n'est pas fourni à un moteur, une tension (Va) appliquée à la première thermistance (411) est inférieure à une tension (Vc) appliquée à la deuxième thermistance (412) lorsque les première et deuxième thermistances ne sont pas immergées dans l'huile, et la tension (Va) appliquée à la première thermistance (411) est supérieure à la tension (Vc) appliquée à la deuxième thermistance (412) lorsque les première et deuxième thermistances sont immergées dans l'huile.

2. Le séparateur d'huile selon la revendication 1, sachant que le séparateur d'huile est monté sur un véhicule, et le mécanisme de détection (41) est situé dans une position qui est inférieure à une position de la partie de séparation dans la direction verticale même dans un cas où un gradient d'une surface de route sur laquelle le véhicule roule est d'une valeur maximale attendue de 22°.

3. Le séparateur d'huile selon la revendication 1 ou 2, sachant que le séparateur d'huile est monté sur un véhicule, le mécanisme de détection (41) est situé dans des positions inférieure et supérieure à une surface de liquide de l'huile dans le réservoir de drainage (35) dans la direction verticale et la partie de séparation est située dans des positions supérieures à une position de la surface de liquide de l'huile dans le réservoir de drainage (35) dans la direction verticale, dans un cas où une accélération/décélération survenue pendant le fonctionnement du véhicule est d'une valeur maximale attendue de 5,9 m/s² (0,6 G).

4. Le séparateur d'huile selon la revendication 1, sachant qu'un trou communiquant (353) qui passe à travers une paroi latérale du réservoir de drainage est formé dans la paroi latérale, et les première et deuxième thermistances (411, 412) sont supportées par le trou communiquant dans la paroi latérale avec un matériau d'isolation thermique situé entre une paroi circonférentielle du trou communiquant et les première et deuxième thermistances.

5. Le séparateur d'huile selon la revendication 1 ou 4, sachant que
lorsque les première et deuxième thermistances sont dans du gaz, une quantité de dissipation thermique de la première thermistance est plus grande qu'une quantité de dissipation thermique de la deuxième thermistance, et
lorsque les première et deuxième thermistances sont dans du liquide, la quantité de dissipation thermique de la première thermistance est plus petite que la quantité de dissipation thermique de la deuxième thermistance.

6. Le séparateur d'huile selon l'une quelconque des revendications 1 à 3, sachant que le mécanisme de détection inclut une thermistance de détection (413) qui génère de la chaleur lorsqu'il est alimenté en courant, et la thermistance de détection est configurée pour avoir un coefficient de dissipation thermique qui a une valeur en fonction d'un débit du combustible gazeux qui s'écoule dans le réservoir de drainage.

7. Le séparateur d'huile selon la revendication 6, sachant qu'un trou communiquant (353) qui passe à travers une paroi latérale du réservoir de drainage est formé dans la paroi latérale, et la thermistance de détection est supportée par le trou communiquant dans la paroi latérale avec du matériau d'isolation thermique situé entre la thermistance de détection et une paroi circonférentielle du trou communiquant.

8. Dispositif d'alimentation en combustible gazeux comprenant :
le séparateur d'huile selon la revendication 2 ou 3 ; et
une unité de commande qui effectue un processus de surveillance dans lequel une quantité de stockage de l'huile dans le réservoir de drainage est surveillée sur la base d'un résultat de détection par le mécanisme de détection lorsque le véhicule est arrêté.

9. Dispositif d'alimentation en combustible gazeux comprenant :
le séparateur d'huile selon la revendication 1 ; et
une unité de commande qui effectue un processus de surveillance dans lequel une quantité de stockage de l'huile dans le réservoir de drainage est surveillée sur la base d'une différence des tensions appliquées aux première et deuxième thermistances lorsque le combustible gazeux qui est passé à travers la partie de séparation n'est pas fourni à un moteur.

10. Le dispositif d'alimentation en combustible gazeux selon la revendication 9, sachant que l'unité de commande effectue le processus de surveillance après qu'un temps prescrit s'est écoulé depuis un commencement d'alimentation en courant des première et deuxième thermistances.

11. Le dispositif d'alimentation en combustible gazeux selon la revendication 9 ou 10, sachant que lorsque le processus de surveillance est terminé, l'unité de commande inhibe l'alimentation en courant des première et deuxième thermistances.

12. Dispositif d'alimentation en combustible gazeux comprenant :
le séparateur d'huile selon la revendication 6 ; et
une unité de commande (25) qui effectue un processus de surveillance dans lequel une quantité de stockage de l'huile dans le réservoir de drainage est surveillée sur la base d'un changement de la tension appliquée à la thermistance de détection lorsque le combustible gazeux qui est passé à travers la partie de séparation commence à être fourni à un moteur.

13. Le dispositif d'alimentation en combustible gazeux selon la revendication 12, sachant que l'unité de commande effectue le processus de surveillance après qu'un temps prescrit s'est écoulé depuis un commencement d'alimentation en courant de la thermistance de détection.

14. Le dispositif d'alimentation en combustible gazeux selon la revendication 12 ou 13, sachant que lorsque le processus de surveillance est terminé, l'unité de commande inhibe l'alimentation en courant de la thermistance de détection.

15. Le dispositif d'alimentation en combustible gazeux selon l'une quelconque des revendications 9 à 14, sachant que si l'unité de commande détermine que la quantité de stockage de l'huile dans le réservoir de drainage a excédé une quantité prescrite via le processus de surveillance, l'unité de commande rapporte la détermination.
